# EUROPEAN PATENT SPECIFICATION

(11) **EP 0 749 713 B1**
(45) Date of publication and mention of the grant of the patent: **09.09.1998**
(21) Application number: 96201741.4
(22) Date of filing: 24.06.1996
(51) Int. Cl.: A47J 31/22

(54) **Apparatus for preparing a beverage through extraction of a base material**
Vorrichtung zum Bereiten eines Getränks durch Extraktion eines Basismaterials
Appareil pour préparer une boisson par extraction d'un matériel de base

(30) Priority: 23.06.1995 NL 1000655
(43) Date of publication of application: 27.12.1996
(73) Proprietor: Sara Lee/DE N.V., 3532 AA Utrecht (NL)
(72) Inventor: Muis, Jan Anne, 3984 NL ODIJK (NL); Vroonland, Christoffel Antonius Johannes, 3769 GL SOESTERBERG (NL); Piscaer, Petrus Josephus Carolus, 3069 LJ ROTTERDAM (NL)
(74) Representative: Smulders, Theodorus A.H.J., Ir.

(56) References cited:
- WO-A-83/00612
- BE-A- 823 309
- DE-C- 3 719 962
- NL-A- 7 214 854

## Description

This invention relates to an apparatus for preparing an extract beverage through extraction of a base material provided in an extraction space, to which a liquid is added for obtaining the extract beverage, comprising a drum-shaped filter element which surrounds at least a part of the extraction space, and driving means for rotating the filter element around an axial axis of the filter element and thereby whirling the extract beverage from the extraction space, while the extracted base material is left behind in the extraction space.

Such an apparatus is known from *inter alia* Dutch patent application no. 7214854. In this known apparatus the filter element consists of a conical drum on which a cover is placed, which, in combination with the drum, forms the extraction space. The diameter of the drum widens in upward direction. The wall of the drum is provided with a perforation, so that the wall is permeable to the extract beverage and impermeable to the base material, in this case ground coffee beans or tea leaves.

During the extraction process, a coffee or tea bed will form on the inside of the rotating drum. A disadvantage is that the thickness of the bed is a function of *inter alia* the diameter of the drum. In this case the thickness of the bed at the top of the drum will be greater than at the bottom of the drum. Also, under the influence of gravity, the thickness of the bed will be a function of the height in the drum. In other words, even if the drum were of cylindrical design, a phenomenon would be in evidence, whereby the thickness of the bed adjacent the bottom of the drum will, for instance, be greater than adjacent a top of the drum.

During the extraction process, the liquid disposed in the space is forced through the bed as a result of the centrifugal force, so that extraction of the base material can take place. Owing to the circumstance that the thickness of the bed along the inside wall of the drum is not constant, the flow resistance of the bed along the inside wall of the drum will likewise vary. As a consequence of this, the magnitude of the liquid flow through a portion of the bed will be dependent on the position of that portion within the bed. As a result of all this, more liquid will be transported through a thinner portion of the bed than through a thicker portion of the bed. If much liquid is transported through a thinner portion of the bed, the taste of the thus formed extract beverage will be adversely affected. In the case of coffee or tea, overextraction will occur in the thin portion of the bed. The taste of the beverage will then become bitter. In that case, so-called secondary extraction is involved. What is only desired, however, is mainly a primary extraction. In a primary extraction of coffee or tea, the only substances released into the liquid extract are those released upon a first contact between the hot liquid and the base material. Only when larger amounts of liquid are forced through a part of the bed does the undesired secondary extraction occur, whereby other, undesired substances are released.

One object of the invention is to provide a solution to the disadvantages mentioned. Accordingly, the apparatus according to the invention is characterized in that the driving means invert the direction of rotation of the filter element at least once during the extraction process.

By the inversion of the direction of rotation, particles of the base material will be re-arranged relative to each other. This means that, statistically speaking, approximately the same amount and kinds of substances will be extracted from all particles. As a result, the extraction of the base material occurs more homogeneously than it does in the known apparatus. This in turn prevents a situation where from some particles too many substances are withdrawn, which results in secondary extraction.

A preferred embodiment of the apparatus is characterized in that the driving means invert the direction of rotation of the filter element repeatedly during the extraction process.

According to a particular embodiment of the apparatus, if the speed is high enough, a new bed will be formed each time after the inversion of the direction of rotation.

Preferably, the driving means comprise a motor and a control unit controlling the motor.

More particularly, the apparatus is characterized in that the control unit in a first mode during the extraction process controls the motor in such a manner that at a first speed the direction of rotation of the filter element is inverted repeatedly, and that the control unit in a second mode during the extraction process, following the first mode, controls the motor in such a manner that the filter element rotates at a second speed, higher than the first speed. The first speed can be chosen to be so low that during the first mode no bed is formed. In that case, during the first mode the base material is continuously mixed in the liquid without a bed being formed. Then during the second mode a bed is formed and the liquid is whirled out through the bed and leaves the extraction space. During the second mode, too, the direction of rotation can be inverted at least once; however, this need not always be the case.

The invention will be further elucidated with reference to the drawings. In the drawings:
Fig. 1 shows a possible embodiment of an apparatus according to the invention;
Fig. 2 shows the apparatus according to Fig. 1 when an extracted base material is whirled out; and
Fig. 3 is an alternative embodiment of an apparatus according to the invention.

In the drawings to be discussed hereinafter, like parts have been provided with the same reference numerals.

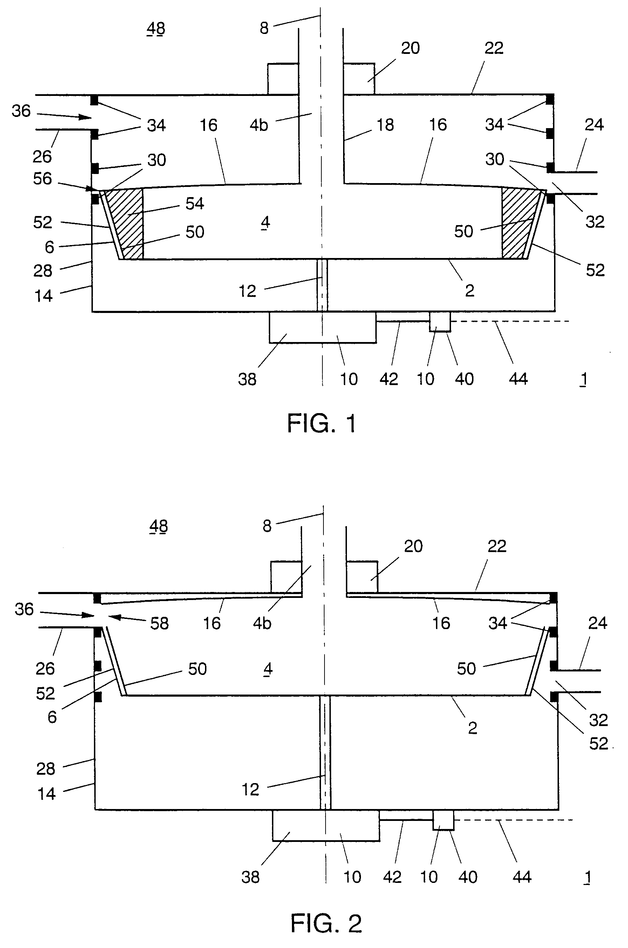

In Fig. 1 reference numeral 1 designates an apparatus for preparing an extract beverage. The apparatus 1 comprises a drum-shaped filter element 2 which surrounds at least a part of the extraction space 4. The drum-shaped filter element 2 in this example has a conical surface 6, the arrangement being such that the diameter of the filter element 2 increases in upward direction. The filter element has a vertical axial axis 8. The apparatus further comprises driving means 10 for rotating the filter element 2 around the axial axis 8. To that end, the drum-shaped filter element 2 is connected to the driving means 10 through a driving shaft 12. The apparatus further comprises a housing 14, in which the drum-shaped filter element 2 is received. The apparatus further comprises a cover member 16 which is connected with transport means 20 through a transport shaft 18. The transport means 20 are fixedly connected, in this example to an upper side of the housing 14. The purpose of the transport means 20 is to move the transport shaft 18 and hence the cover member 16 up and down. Further, in a known manner, the transport means 20 and the transport shaft 18 are so constructed that the transport shaft 18 can rotate freely around the axial axis 8.

The driving means 10 in this example are likewise fixedly connected to the housing 14. Further, the driving means 10 are suitable to move the driving shaft 12 and hence the filter element 2 up and down. The housing 14 further comprises a first discharge duct 24 for discharging extract beverage. Further, the housing comprises a second discharge duct 26, separate from the first discharge duct 24, for discharging base material such as ground coffee beans or tea leaves used to prepare the extract beverage. A cylindrical sidewall 28 of the housing 14 comprises on its inside circular ribs 30 spaced apart some distance. The two ribs form a downwardly extending channel, and at the lowest point of the ribs 30 an opening 32 is present, which opens into the first discharge duct 24. Further, the inside of the sidewall 28 is provided with two circumferential second ribs 34, which are located above the first ribs 30. The sidewall 28 comprises a second opening 36 which connects the interior of the housing 14 to the second discharge duct 26. The second opening 36 is located between the two second ribs 34.

The driving means 10 in this example comprise a motor 38 and a control unit 40, which controls the motor 38 via a line 42. The control unit 40 also controls the transport means 20 via line 44. As can be seen in Fig. 1, the transport shaft 18 comprises a passage 46, which provides an open communication between the extraction space 4 and the environment 48.

In this example, the drum-shaped filter element 2 has a perforated inner surface 50 and an outer surface 52, located at some distance from the inner surface 50. The inner surface 50 functions as a filter which allows the extract beverage to pass and retains the base material. The outer surface 52, on the other hand, is impermeable to the extract beverage.

The operation of the system is as follows. First of all, via the passage 46, in a manner known per se, an amount of dry base material is introduced into the extraction space 4. This dry base material can for instance consist of ground coffee beans or tea leaves. Then, in this example likewise via the passage 46, a hot liquid is introduced into the extraction space 4. The introduction of the base material and the hot liquid can be carried out manually, but also automatically. In the latter case, this will be initialized by the control unit 40. The cover member 16 then adjoins the filter element 2, the arrangement being such that the extraction space 4 is formed by the cover member 16 and the filter element 2. After the hot liquid and the base material have been introduced into the extraction space 4, the control unit 40 in a first mode activates the motor 38, so that the filter element 2 starts to rotate around the axial axis 8. The control unit 40 controls the motor 38 in such a way that the direction of rotation of the filter element 2 is inverted at least once and preferably repeatedly. As a result of all this, by the rotation of the filter element 2, the base material and the hot liquid are mixed with each other in the extraction space 4. Owing to the repeated inversion of the direction of rotation of the filter element 2, a very homogeneous suspension of liquid and base material is formed. The speed of the motor 38 is so low that the base material remains floating within the hot liquid. At this time, therefore, the base material is not whirled outward against the inner surface 50 of the filter element 2 as a result of the centrifugal force. Accordingly, no bed of base material stuck against the inner surface 50 of the filter element 2 is formed yet. During the rotary movement of the filter element 2, the base material is extracted by the hot liquid. The hot liquid thereby turns into an extracted beverage.

Then, in a second mode in the extraction process, following the first mode, the control unit controls the motor 38 in such a manner that the filter element 2 rotates around the axial axis 8 at a second speed, which is higher than the first speed. The second speed is so high that as a result of the centrifugal force the extract beverage and the base material are whirled outwards in radial direction. As a result, a bed 54 of base material will form on the inside of the filter element 2 along the inner surface 50. The cover member 16 and the inner surface 50 retain the base material. The extract beverage, by contrast, will be forced through the bed 54 as a result of the centrifugal force and also be transported through the perforated openings of the inner surface 50. The extract beverage then enters a narrow space formed between the outer surface 52 and the inner surface 50 of the filter element 2. Owing to the outer surface 52 slanting upwards, the extract beverage will move upwards along the outer surface under the influence of the centrifugal force. Between the cover 16 and the edge of the outer surface 52, a narrow gap 56 is present, through which the extract beverage can be whirled out as a result of the centrifugal force. The extract beverage will then end up between the first ribs 30. The first ribs 30, together with the inside surface of the sidewall 28, form a channel along which the extract beverage can flow down in the direction of the first discharge duct 24. The extract beverage will leave the apparatus 1 via the first discharge duct 24 and is now suited for consumption.

The extraction process is ended when the extract beverage has left the apparatus 1. The control unit 40 now controls the motor 38 in such a manner that the filter element 2 is moved up until the top of the filter element 2 is approximately flush with the top of the lower rib of the two second ribs 34. Then the control unit 40 controls the transport means 20, so that the cover member 16 is moved up further than the filter element 2.

The apparatus is now in a situation as shown in Fig. 2. The control unit 40 then actuates the motor 38 in such a manner that the speed of the filter element 2 is increased, to such an extent that the base material can be whirled out through an opening formed between the cover member 16 and the filter element 2, to subsequently leave the apparatus 1 via the second discharge duct 26. It is not necessary to invert the direction of rotation of the filter element 2 as the base material is being whirled out. However, if base materials are used that are by nature fairly sticky when wet, the control unit 40 can, after the extraction process, control the motor in such a manner that the direction of rotation of the filter element 2 is inverted at least once. The inversion of the direction of rotation then provides the advantage that the sticky bed 54 is whirled out of the extraction space in the second instance. It is noted that during the second mode too, the direction of rotation of the filter element 2 can be inverted at least once.

According to an alternative embodiment of the apparatus according to the invention, the extraction process does not take place during a first and second mode of the control unit. Instead, the control unit 40 controls the motor 38 during the extraction process in such a manner that the direction of rotation of the filter element 2 is inverted repeatedly. However, the speed of the filter element 2 is so high that the bed 54 is formed. When after the bed has been formed the speed rapidly decreases to zero and then rapidly increases again to its maximum value in the opposite direction, the bed will be broken down during this inversion of the direction of rotation to be subsequently built up again. The advantage is that the base material is re-arranged in the bed, so that a homogeneous extraction of the base material can take place. During this extraction process, the extract beverage will be gradually fed via the gap 56 to the first discharge duct 24. After the extract beverage has left the apparatus 1, the control unit 40 will control the motor 38 and the transport means 20 in such a manner that the base material is also discharged, as has been described with reference to Fig. 2.

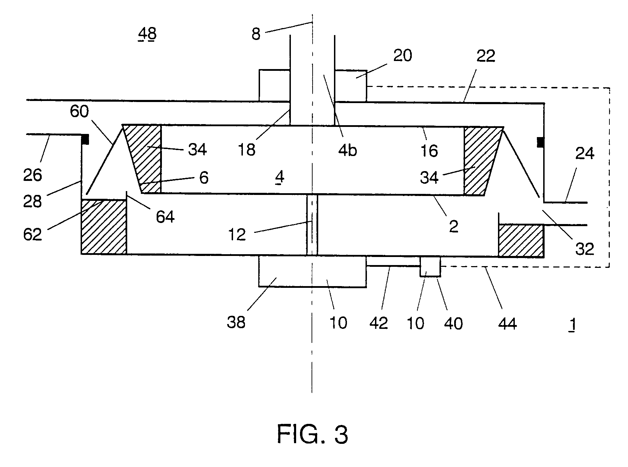

Fig. 3 shows an alternative embodiment of an apparatus 1 for preparing an extract beverage. In this example, the filter element 2 comprises a perforated surface 6. The surface 6 has the property that a liquid is allowed to pass and a base material is retained. Further, the filter element 2 comprises an outwardly slanting and downwardly extending screen plate 60 which at the top thereof is connected to an upper edge of the surface 6. During the extraction process, the cover member 16 will touch the upper edge of the conical surface 6, so that the cover member 16 and the filter element 2 again form the extraction space 4. The apparatus according to Fig. 3 further comprises a circumferential horizontally directed plateau 62, which is located under the screen plate 60. The plateau 62 is bounded on one side by the sidewall 28 and on another side by an upright edge 64. The plateau 62, the upright side edge 64 and the sidewall 28 form a sloping channel 66, the lowest point of the channel 66 being located adjacent the first discharge duct 24. During the extraction process, which can be carried out in a manner entirely analogous to that described on the basis of various examples with reference to Figs. 1 and 2, the extract beverage will eventually be whirled out through the perforation of the surface 6. This extract beverage will touch the screen plate 60 and flow down along it to end up in the channel 66. The further operation of the apparatus according to Fig. 3 is entirely analogous to that described with reference to Figs. 1 and 2. This means that during the extraction process the direction of rotation of the filter element 2 is inverted repeatedly. This can be done at a relatively low speed in a first mode, whereafter a second mode ensues, in which the speed is increased. During this second mode, the direction of rotation of the filter element 2 can be inverted at least once, but not necessarily so. However, it is also possible for extraction to take place only at a high speed, while moreover the direction of rotation of the filter element 2 is inverted repeatedly. After the extract beverage has left the apparatus, the control unit 40 controls the transport means 20 in such a manner that the cover member 16 is transported to a position represented in phantom in Fig. 3. Meanwhile, in contrast with Fig. 1, the filter element 2 remains at the same height. Then the control unit 40 controls the motor 38 in such a manner that the speed takes a value such that the base material is whirled out along the surface 6 to leave the apparatus via the second discharge duct 26.

It will be clear that the invention is not in any way limited to the above-described exemplary embodiments. Thus, for instance, the inner surface 50 of the filter element 2 according to Fig. 1 can be omitted altogether. In that case, the gap 56 will serve as a filter, in such a manner that the extraction liquid is whirled out and can leave the apparatus 1 via the gap 56 through the first discharge duct 24. However, the gap 56 is so narrow that the base material is not whirled out. It is also possible for the axial axis 8 to be arranged other than vertically. It is also possible for the drum-shaped filter element 2 to form a cylinder. So, in that case, no conical surface is present. Also conceivable are variants in which the surface 6, though conical, is arranged in such a manner that the diameter of the extraction space 4 decreases from the bottom to the top.

It is also possible that the inversion of the direction of rotation of the filter element, though occurring repeatedly, does not occur periodically. Thus, a first inversion can occur after, for instance, 8 seconds, a second inversion after 10 seconds, a third inversion after 13 seconds, etc. These variants are all understood to fall within the scope of the claims.

## Claims

1. An apparatus for preparing an extract beverage through extraction of a base material provided in an extraction space (4), to which a liquid is added for obtaining the extract beverage, comprising a drum-shaped filter element (2) which surrounds at least a part of the extraction space, and driving means (10) for rotating the filter element (2) around an axial axis (8) of the filter element and thereby whirling the extract beverage from the extraction space (4), while the extracted base material is left behind in the extraction space, characterized in that the driving means (10) invert the direction of rotation of the filter element (2) at least once during the extraction process.

2. An apparatus according to claim 1, characterized in that the driving means (10) invert the direction of rotation of the filter element (2) repeatedly during the extraction process.

3. An apparatus according to claim 1 or 2, characterized in that the filter element comprises a conical surface (6).

4. An apparatus according to claim 1, 2 or 3, characterized in that the driving means (10) comprise a motor (38) and a control unit (40) which controls the motor.

5. An apparatus according to claims 3 and 4, characterized in that after the extraction process the control unit (40) increases the speed of the motor (38) for whirling out the base material.

6. An apparatus according to claim 4 or 5, characterized in that the control unit (40) in a first mode during the extraction process controls the motor (38) in such a manner that at a first speed the direction of rotation of the filter element (2) is inverted repeatedly, and that the control unit (40) in a second mode during the extraction process, following the first mode, controls the motor (38) in such a manner that the filter element (2) rotates at a second speed, higher than the first speed.

7. An apparatus according to claim 6, characterized in that the speed during the first mode has a value such that in the filter element no bed of base material is formed, and that the speed during the second mode is such that in the filter element a bed of base material *is* formed.

8. An apparatus according to claim 6 or 7, characterized in that during the second mode the control unit (40) controls the motor (38) in such a manner that the direction of rotation is inverted at least once.

9. An apparatus according to claim 4, 5 or 6, characterized in that after the extraction process the control unit (40) controls the motor (38) in such a manner that the direction of rotation of the filter element is inverted at least once.

10. An apparatus according to claim 3, characterized in that the apparatus further comprises a cover member (16), the cover member (16) and the filter element (2) being movable relative to each other in axial direction from a first position to a second position and vice versa, while in the first position the cover member (16) together with the filter element (2) forms the extraction space (4) and in the second position the cover member (16) is separated from the filter element (2) for whirling the base material from the filter element.

11. An apparatus according to claim 10, characterized in that in the first position a narrow gap is present between the filter element (2) and the cover member (16), the gap functioning during the extraction process as a filter allowing the extract beverage to pass and retaining the base material.

12. An apparatus according to any one of the preceding claims, characterized in that the filter element (2) comprises a perforated surface (50) which during the extraction process functions as a filter allowing the extract beverage to pass and retaining the base material.

13. An apparatus according to any one of the preceding claims, characterized in that the filter element comprises an inner surface (50) which is at least partly perforated and an outer surface (52), spaced some distance from the inner surface (50), the inner surface functioning as a filter allowing the extract beverage to pass and retaining the base material, and the outer surface (52) being impermeable to the extract beverage.

14. An apparatus according to any one of the preceding claims, characterized in that the axial axis (8) is directed vertically.

15. An apparatus according to any one of the preceding claims, characterized in that the apparatus further comprises a housing (14) with a first discharge duct (24) for discharging the whirled-out extract beverage and a second discharge duct (26), separate from the first discharge duct, for discharging the whirled-out base material.

## Patentansprüche

1. Vorrichtung zum Bereiten eines Extraktgetränkes durch Extraktion eines Basismaterials, das in einem Extraktionsraum (4) angeordnet ist und dem eine Flüssigkeit zum Erhalten des Extraktgetränkes zugefügt worden ist,
miteinem trommelförmigen Filterelement (2), das zumindest teilweise den Extraktionsraum (4) umgibt, und
mit Antriebsmitteln (10) zum Drehen des Filterelementes (2) um eine axiale Achse (8) des Filterelementes, um dabei das Extraktgetränk aus dem Extraktionsraum (4) zu schleudern, während das extrahierte Basismaterial in dem Extraktionsraum (4) zurückgelassen wird,
**dadurch gekennzeichnet,**
daß das Antriebsmittel (10) zumindest einmal während des Extraktionsprozesses die Drehrichtung des Filterelementes (2) invertiert.

2. Vorrichtung nach Anspruch 1, dadurch gekennzeichnet, daß das Antriebsmittel (10) die Drehrichtung des Filterelementes (2) wiederholend während des Extraktionsprozesses invertiert.

3. Vorrichtung nach Anspruch 1 oder 2, dadurch gekennzeichnet, daß das Filterelement (2) eine konische Oberfläche (6) aufweist.

4. Vorrichtung nach Anspruch 1, 2 oder 3, dadurch gekennzeichnet, daß das Antriebsmittel (10) einen Motor (38) und eine Steuereinheit (40) aufweist, die den Motor (38) steuert.

5. Vorrichtung nach Anspruch 3 und 4, dadurch gekennzeichnet, daß nach dem Extraktionsprozeß die Steuereinheit (40) die Geschwindigkeit des Motors (38) erhöht, um das Basismaterial wegzuschleudern.

6. Vorrichtung nach Anspruch 4 oder 5, dadurch gekennzeichnet, daß die Steuereinheit (40) in einer ersten Betriebsweise während des Extraktionsprozesses den Motor (38) in einer Weise steuert, daß bei einer ersten Geschwindigkeit die Drehrichtung des Filterelementes (2) wiederholend invertiert wird, und daß die Steuereinheit (40) in einer zweiten Betriebsweise während des Extraktionsprozesses nach der ersten Betriebsweise den Motor (38) in einer Weise steuert, daß das Filterelement (2) mit einer zweiten Geschwindigkeit rotiert, die höher als die erste Geschwindigkeit ist.

7. Vorrichtung nach Anspruch 6, dadurch gekennzeichnet, daß die Geschwindigkeit während der ersten Betriebsweise einen solchen Wert aufweist, daß in dem Filterelement kein Bodensatz an Basismaterial gebildet wird, und daß die Geschwindigkeit während der zweiten Betriebsweise so ist, daß in dem Filterelement ein Bodensatz an Basismaterial gebildet wird.

8. Vorrichtung nach Anspruch 6 oder 7, dadurch gekennzeichnet, daß während der zweiten Betriebsweise die Steuereinheit (40) den Motor (38) in einer Weise steuert, daß die Drehrichtung mindestens einmal invertiert wird.

9. Vorrichtung nach Anspruch 4, 5 oder 6, dadurch gekennzeichnet, daß nach Extraktionsprozeß die Steuereinheit (40) den Motor (38) in einer Weise steuert, daß die Drehrichtung des Filterelementes mindestens einmal invertiert wird.

10. Vorrichtung nach Anspruch 3, dadurch gekennzeichnet, daß die Vorrichtung weiter ein Abdeckelement (16) aufweist, wobei das Abdeckelement (16) und das Filterelement (2) relativ zueinander in axialer Richtung von einer ersten zu einer zweiten Position und zurück bewegbar sind, wobei in der ersten Position das Abdeckelement (16) zusammen mit dem Filterelement (2) den Extraktionsraum (4) bildet und wobei in der zweiten Position das Abdeckelement (16) vom Filterelement (2) getrennt ist, um das Basismaterial vom Filterelement wegzuschleudern.

11. Vorrichtung nach Anspruch 10, dadurch gekennzeichnet, daß in der ersten Position ein schmaler Spalt zwischen dem Filterelement (2) und dem Abdeckelement (16) vorgesehen ist, wobei der Spalt während des Extraktionsprozesses als Filter wirkt, der es ermöglicht, daß das Extraktgetränk durchgelassen wird und das Basismaterial zurückgehalten wird.

12. Vorrichtung nach einem der vorangegangenen Ansprüche, dadurch gekennzeichnet, daß das Filterelement (2) eine perforierte Oberfläche (50) aufweist, die während des Extraktionsprozesses als Filter wirkt, der es ermöglicht, daß das Extraktgetränk durchgelassen wird und daß das Basismaterial zurückgehalten wird.

13. Vorrichtung nach einem der vorangegangenen Ansprüche, dadurch gekennzeichnet, daß das Filterelement eine innere Oberfläche (50), die zumindest teilweise perforiert ist, und eine äußere Oberfläche (52), die mit einigem Abstand von der inneren Oberfläche (50) beabstandet angeordnet ist, aufweist, wobei die innere Oberfläche als Filter wirkt, der es ermöglicht, daß das Extraktgetränk durchgelassen wird und daß das Basismaterial zurückgehalten wird, und wobei die äußere Oberfläche (52) für das Extraktgetränk undurchlässig ist.

14. Vorrichtung nach einem der vorangegangenen Ansprüche, dadurch gekennzeichnet, daß die axiale Achse (8) vertikal ausgerichtet ist.

15. Vorrichtung nach einem der vorangegangenen Ansprüche, dadurch gekennzeichnet, daß die Vorrichtung weiterhin ein Gehäuse (14) mit einem ersten Auslaß (24) für ein Auslassen des ausgeschleuderten Extraktgetränkes und einen zweiten Auslaß (26) für ein Auslassen des ausgeschleuderten Basismaterials aufweist, wobei der zweite Auslaß (26) vom ersten Auslaß (24) getrennt angeordnet ist.

## Revendications

1. Appareil pour préparer une boisson aux extraits par extraction d'un matériel de base disposé dans espace d'extraction (4) auquel un liquide est ajouté pour obtenir la boisson aux extraits, comprenant un élément filtrant (2) en forme de tambour qui entoure au moins une partie de l'espace d'extraction, et des moyens d'entraînement (10) pour faire tourner l'élément filtrant (2) autour d'un axe axial (8) de l'élément filtrant et faire sortir ainsi la boisson aux extraits de l'espace d'extraction (4) par un mouvement tourbillonnant, tandis que le matériel de base extrait est laissé en arrière dans l'espace d'extraction, caractérisé en ce que les moyens d'entraînement (10) inversent le sens de rotation de l'élément filtrant (2) au moins une fois pendant le processus d'extraction.

2. Appareil selon la revendication 1, caractérisé en ce que les moyens d'entraînement (10) inversent le sens de rotation de l'élément filtrant (2) de façon répétée pendant le processus d'extraction.

3. Appareil selon la revendication 1 ou 2, caractérisé en ce que l'élément filtrant comprend une surface conique (6).

4. Appareil selon la revendication 1, 2 ou 3, caractérisé en ce que les moyens d'entraînement (10) comprennent un moteur (38) et une unité de commande (40) qui commande le moteur.

5. Appareil selon les revendications 3 et 4, caractérisé en ce que, après le processus d'extraction, l'unité de commande (40) augmente la vitesse du moteur (38) pour évacuer le matériel de base dans un mouvement tourbillonnant.

6. Appareil selon la revendication 4 ou 5, caractérisé en ce que l'unité de commande (40), dans un premier mode pendant le processus d'extraction, commande le moteur (38) de telle manière que, à une première vitesse, le sens de rotation de l'élément filtrant (2) est inversé de façon répétée, et en ce que l'unité de commande (40), dans un deuxième mode pendant le processus d'extraction, qui suit le premier mode, commande le moteur (38) de telle manière que l'élément filtrant (2) tourne à une deuxième vitesse, supérieure à la première vitesse.

7. Appareil selon la revendication 6, caractérisé en ce que la vitesse pendant le premier mode a une valeur telle qu'aucun lit de matériel de base n'est formé dans l'élément filtrant, et en ce que la vitesse pendant le deuxième mode est telle qu'un lit de matériel de base est formé dans l'élément filtrant.

8. Appareil selon la revendication 6 ou 7, caractérisé en ce que, pendant le deuxième mode, l'unité de commande (40) commande le moteur (38) de sorte que le sens de rotation est inversé au moins une fois.

9. Appareil selon la revendication 4, 5 ou 6, caractérisé en ce que, après le processus d'extraction, l'unité de commande (40) commande le moteur (38) de telle manière que le sens de rotation de l'élément filtrant est inversé au moins une fois.

10. Appareil selon la revendication 3, caractérisé en ce que l'appareil comprend en outre un élément de couvercle (16), l'élément de couvercle (16) et l'élément filtrant (2) étant mobiles l'un par rapport à l'autre dans une direction axiale depuis une première position vers une deuxième version et vice versa, tandis que, dans la première position, l'élément de couvercle (16), avec l'élément filtrant (2), forme l'espace d'extraction (4) et, dans la deuxième position, l'élément de couvercle (16) est séparé de l'élément filtrant (2) pour faire sortir le matériel de base de l'élément filtrant par un mouvement tourbillonnant.

11. Appareil selon la revendication 10, caractérisé en ce que en ce que, dans la première position, il y a un intervalle étroit entre l'élément filtrant (2) et l'élément de couvercle (16), l'intervalle fonctionnant pendant le processus d'extraction comme un filtre permettant à la boisson aux extraits de passer et retenant le matériel de base.

12. Appareil selon l'une quelconque des revendications précédentes, caractérisé en ce que l'élément filtrant (2) comprend une surface perforée (50) qui, pendant le processus d'extraction, fonctionne comme un filtre permettant à la boisson aux extraits de passer et retenant le matériel de base.

13. Appareil selon l'une quelconque des revendications précédentes, caractérisé en ce que l'élément filtrant comprend une surface intérieure (50) qui est au moins partiellement perforée et une surface extérieure (52), placée à une certaine distance de la surface intérieure (50), la surface intérieure fonctionnant comme un filtre permettant à la boisson aux extraits de passer et retenant le matériel de base, et la surface extérieure (52) étant imperméable à la boisson aux extraits.

14. Appareil selon l'une quelconque des revendications précédentes, caractérisé en ce que l'axe axial (8) est dirigé verticalement.

15. Appareil selon l'une quelconque des revendications précédentes, caractérisé en ce que l'appareil comprend également une enveloppe (14) avec une première gaine de décharge (24) pour décharger la boisson aux extraits évacuée avec un mouvement tourbillonnant et une deuxième gaine de décharge (26), séparée de la première gaine de décharge, pour décharger le matériel de base évacué avec un mouvement tourbillonnant.
